# EUROPEAN PATENT SPECIFICATION

(11) **EP 4 000 873 B1**
(45) Date of publication and mention of the grant of the patent: **04.09.2024**
(21) Application number: 21208083.2
(22) Date of filing: 12.11.2021
(51) Int. Cl.: B29C 65/20, B29C 65/10, B29C 65/40, B29C 65/00, E06B 3/96, B29C 65/72, B29C 65/78, B29L 12/00, B29L 31/00

(54) **METHOD AND MACHINE TO WELD SECTION BARS MADE OF A PLASTIC MATERIAL, IN PARTICULAR PVC**
VERFAHREN UND MASCHINE ZUM SCHWEISSEN VON PROFILSTÄBEN AUS KUNSTSTOFF, INSBESONDERE PVC
PROCÉDÉ ET MACHINE POUR SOUDER DES BARRES DE SECTION EN MATIÈRE PLASTIQUE, NOTAMMENT EN PVC

(30) Priority: 13.11.2020 IT 202000027209
(43) Date of publication of application: 25.05.2022
(73) Proprietor: F.O.M. Industrie S.r.l., 47841 Cattolica (RN) (IT)
(72) Inventor: LATTANZI, Lorenzo, 47841 Cattolica (RN) (IT)
(74) Representative: Studio Torta S.p.A.

(56) References cited:
- EP-A1- 3 117 981
- EP-A1- 3 339 006
- EP-A1- 3 542 996
- DE-A1- 102009 035 628
- DE-U1- 20 107 626
- JP-A- H03 110 134
- US-A1- 2010 147 465
- US-A1- 2011 024 038
- US-A1- 2018 229 440

## Description

### CROSS-REFERENCE TO RELATED APPLICATIONS

This patent application claims priority from Italian patent application no. 102020000027209 filed on November 13, 2020.

### TECHNICAL FIELD

The invention relates to a machine to weld section bars made of a plastic material, in particular PVC.

The invention especially finds advantageous application in the manufacturing of door and window frames comprising four section bars arranged so as to be perpendicular to one another two by two, to which explicit reference will be made in the description below without because of this loosing in generality.

### PRIOR ART

In the manufacturing of door and window frames, a machine is known, which is designed to weld section bars made of a plastic material, each having an elongated trapezoid shape and delimited by two opposite end faces oriented at respective 45° angles relative to a longitudinal axis of the section bar.

The machine comprises a plurality of holding and welding units, which are as many as the number of section bars and are each arranged in the area of the end faces of two respective section bars, which are adjacent to one another.

Each holding and welding unit comprises two holding devices, which are arranged and configured so as to grab and hold the free ends of the relative section bars and are mounted so as to move the relative section bars in two moving directions, which are transverse to one another and to the section bars.

Each holding and welding unit cooperates with a milling device, which is designed to create a containing channel along a peripheral edge of the end faces of the relative section bars and further cooperates with a welding plate, which is designed to heat the end faces of the section bars.

In use, once the containing channels have been created and the end faces have been heated, the section bars are moved by the relative holding devices in the moving directions and to a welding position, in which the end faces of the section bars come into contact with one another so as to be welded.

When the section bars are arranged in the welding position, each holding and welding unit further cooperates with a pressing device, which is movable from and to an operating position, in which the pressing device is placed into contact with the relative section bars and around at least part of the relative end faces in order to hold the weld bead produced by the coupling between the end faces inside the relative containing channels.

Known machines to weld section bars made of a plastic material of the type described above are affected by some drawbacks, which are mainly due to the fact that the creation of said containing channels generates shavings and/or swarf, which can jeopardize the correct welding of the section bars, and leads to processing cycles of the end faces of the section bars that are relatively long and expensive. DE 201 07 626 U1 and US 2018/229440 A1 disclose a hot-gas welding apparatus wherein a weld material is applied and weld section bars are pre-heated by one nozzle.

### SUBJECT-MATTER OF THE INVENTION

The object of the invention is to provide a machine to weld section bars made of a plastic material, in particular PVC, which is not affected by the aforementioned drawbacks and is simple and economic to be manufactured.

According to the invention, there is provided a machine to weld section bars made of a plastic material, in particular PVC, according to claims 1 to 5.

The invention further relates to a method to weld section bars made of a plastic material, in particular PVC.

According to the invention, there is provided a method to weld section bars made of a plastic material, in particular PVC, according to claims 6 to 8.

### BRIEF DESCRIPTION OF THE DRAWINGS

The invention will now be described with reference to the accompanying drawings, showing a non-limiting embodiment thereof, wherein:
figure 1 is a schematic perspective view, with parts removed for greater clarity, of a preferred embodiment of the machine according to the invention;
figures 2 and 3 are two schematic perspective views, with parts removed for greater clarity, of a detail of the machine of figure 1 shown in two different operating positions;
figure 4 is a schematic perspective view, with parts removed for greater clarity, of a first detail of figures 2 and 3;
figure 5 is a longitudinal section, with parts removed for greater clarity, of a detail of figure 4; and
figure 6 is a schematic perspective view, with parts removed for greater clarity, of a second detail of figures 2 and 3.

### PREFERRED EMBODIMENT OF THE INVENTION

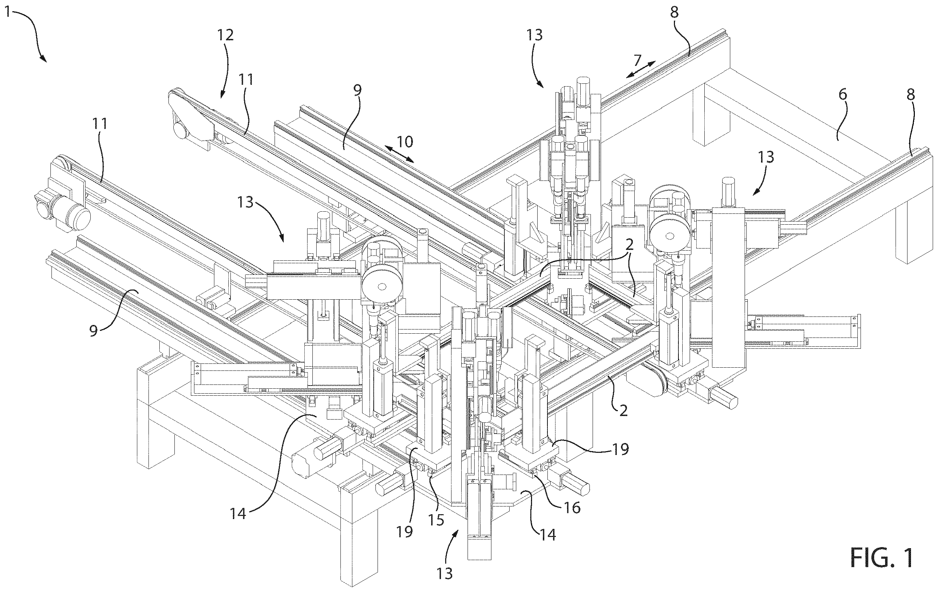

With reference to figures 1, 2 and 3, number 1 indicates, as a whole, a machine to weld section bars 2 made of a plastic material, in particular PVC, and to manufacture, in particular, door and window frames comprising four section bars 2, which are perpendicular to one another two by two.

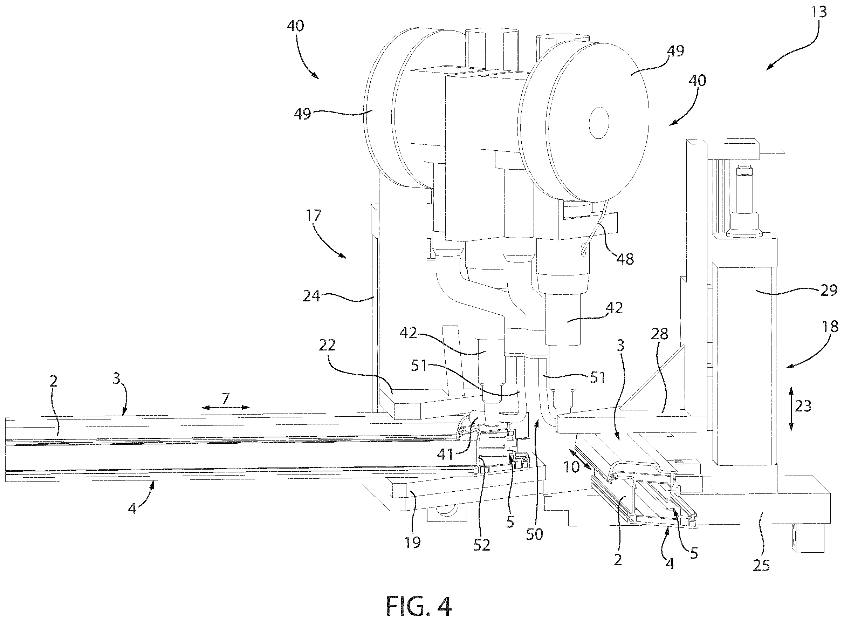

Each section bar 2 has an elongated trapezoid shape, is delimited by an upper face 3 and by a lower face 4, which are opposite one another, and is further delimited by two end faces 5, which are oriented at respective 45° angles relative to the faces 3 and 4 (figure 4).

The machine 1 comprises an elongated base 6, which extends in a horizontal direction 7 and is provided with two longitudinal guide members 8, which are parallel to the direction 7.

The base 6 supports two cross members 9, which extend above the base 6 in a horizontal direction 10, which is transverse to the direction 7, and are coupled to the longitudinal members 8 in a sliding manner so as to make straight movements along the longitudinal members 8 in the direction 7.

A belt conveyor 11 is fixed to each cross member 9, extends in the direction 10, is mounted between the two cross members 9 and defines, together with the conveyor 11 of the other cross member 9, a conveyor device 12 to discharge the door or window frame once it has been produced.

Each cross member 9 supports a pair of holding and welding units 13, each comprising a slide 14, which is coupled to the cross member 9 in a sliding manner so as to be moved, in an initial set-up phase for the set-up of the machine 1, along the cross member 9 in the direction 10.

The slide 14 is provided with two guide devices 15, 16, which are mounted parallel to the directions 7 and 10, respectively, and support respective holding devices 17, 18.

Each device 17 comprises a lower jaw 19, which is coupled to the device 15 in a sliding manner so as to make, relative to the slide 14 and due to the thrust of an actuator device 20, straight movements in the direction 7.

The jaw 19 is provided with a limit stop element 21 extending in the direction 10, in order to allow for a correct positioning of the section bars 2, and cooperates with an upper jaw 22 coupled to the jaw 19 so as to move, relative to the jaw 19, in a vertical direction 23, which is orthogonal to the directions 7 and 10.

The jaw 22 is moved in the direction 23 between a locking position and a release position to lock and release the section bars 2 by an actuator cylinder 24, which is fixed to the jaw 19 parallel to the direction 23.

Each device 18 comprises a lower jaw 25, which is coupled to the device 16 in a sliding manner so as to make, relative to the slide 14 and due to the thrust of an actuator device 26, straight movements in the direction 10.

The jaw 25 is provided with a limit stop element 27 extending in the direction 7, in order to allow for a correct positioning of the section bars 2, and cooperates with an upper jaw 28 coupled to the jaw 25 so as to move, relative to the jaw 25, in the direction 23.

The jaw 28 is moved in the direction 23 between a locking position and a release position to lock and release the section bars 2 by an actuator cylinder 29, which is fixed to the jaw 25 parallel to the direction 23.

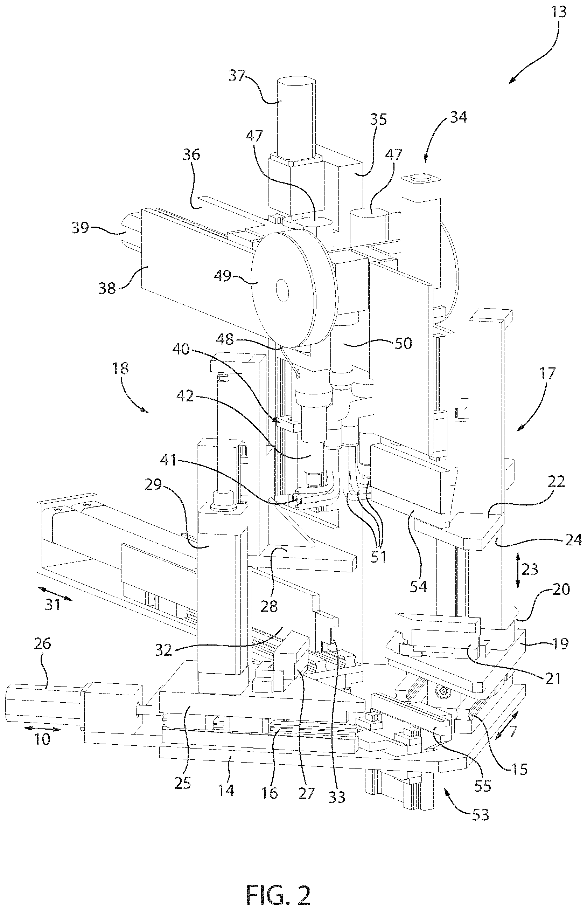

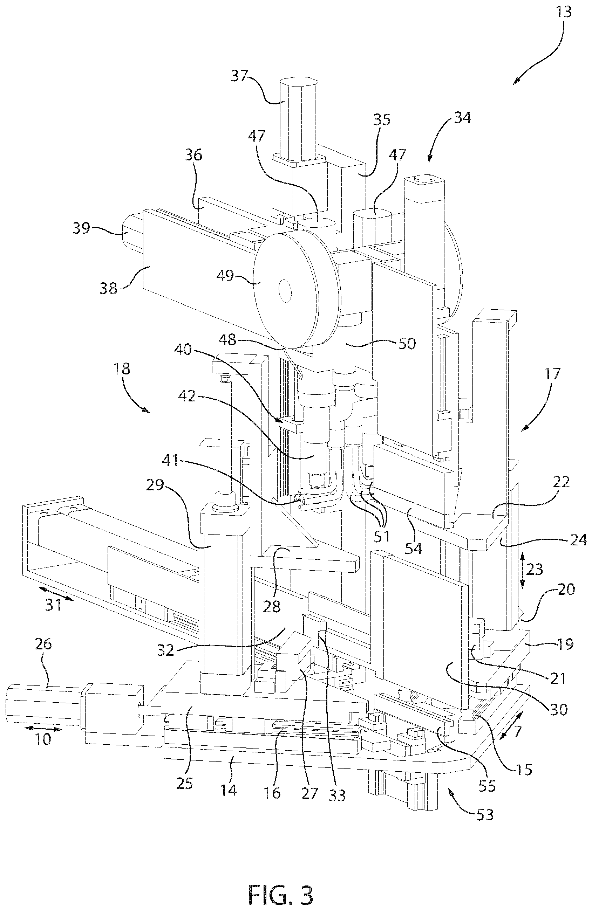

The unit 13 further comprises a welding plate 30, which extends in a containing plane arranged at a 45° angle relative to the directions 7 and 10 and is movable in a direction 31, which is parallel to the containing plane, between a retracted rest position (figure 2) and a forward operating position (figure 3).

The unit 13 further comprises a positioning plate 32, which is parallel and alongside the plate 30, is movable in the direction 31 between a retracted rest position (figures 2 and 3) and a forward operating position (not shown) and is provided with a shaped free edge 33 having a profile that matches the profile of the section bars 2.

The unit 13 is further provided with an applying assembly 34 comprising a vertical upright 35, which projects upwards from the slide 14, extends in the direction 23 and is engaged, in a sliding manner, by a vertical slide 36, which is movable along the upright 35 in the direction 23 due to the thrust of a known operating device 37.

The assembly 34 further comprises a horizontal slide 38, which is coupled to the slide 36 in a sliding manner so as to move, relative to the slide 36 and due to the thrust of a known operating device 39, in the direction 31.

The slide 38 supports two opposite applying devices 40, each associated with the face 5 of a relative section bar 2.

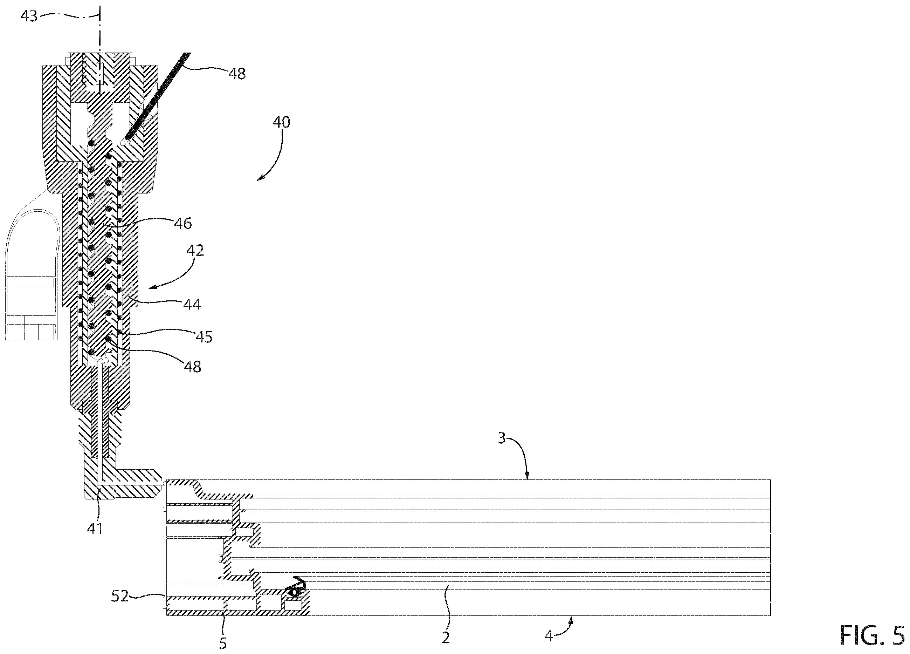

According to figures 4 and 5, each device 40 is provided with a dispensing nozzle 41, which extends crosswise to the directions 23 and 31, is fixed at the end of a sleeve 42 and has an orientation which is contrary to the orientation of the nozzle 41 of the other device 40.

The sleeve 42 has a longitudinal axis 43 parallel to the direction 23 and is delimited by a side wall 44, which is coaxial to the axis 43 and houses, on the inside, an electric resistance 45, which is wound in a spiral around and along said axis 43.

The sleeve 42 houses, on the inside, a feeding Archimedes' screw 46, which is coupled to the sleeve 42 in a rotary manner so as to rotate around the axis 43 due to the thrust of a known operating device 47.

The Archimedes' screw 46 receives a thread 48 of weld material, in particular PVC, which is unwound from a spool 49 mounted on the slide 38 in a rotary manner, at first is fed into the sleeve 42 through the wall 44, then is fed by the Archimedes' screw 46 with a rotation-translation movement along and around said axis 43 in order to be heated by the resistance 45 and finally is fed to the nozzle 41 and onto the face 5 of the relative section bar 2.

With reference to figures 2 and 3, the device 40 cooperates with a heating device 50 comprising a plurality of blower nozzles 51 (in this specific case, four nozzles 51), which are distributed around the nozzle 41, face the face 5 of the relative section bar 2 and are connected to a source of hot air under pressure in order to heat the face 5 of the relative section bar 2.

The nozzles 51 are selectively controlled so as to activate the nozzle 51 that each time is arranged downstream of the nozzle 41 in a moving direction of the nozzle 41 along the face 5 of the relative section bar 2.

According to a variant which is not shown herein and which is not covered by the claims, the nozzles 51 are eliminated and replaced by one single blower nozzle, which is movable around the nozzle 41 so as to always be arranged downstream of the nozzle 41 in a moving direction of the nozzle 41 along the face 5 of the relative section bar 2.

The operation of the machine 1 will now be described with reference to figures 1, 4 and 6, assuming that two section bars 2 are welded, taking into account one single holding and welding unit 13 and starting from an instant in which:
the positioning plate 32 is arranged in its forward operating position; and
the section bars 2 taken into account are locked between the lower jaws 19, 25 and the upper jaws 22, 28 of the holding devices 17, 18 and are in contact with the limit stop elements 21, 27 and with the positioning plate 32.

The holding devices 17, 18 are moved in the relative directions 7, 10 so as to disengage the faces 5 of the section bars 2 from the plate 32; the plate 32 is moved to its retracted rest position; and the applying devices 40 are moved between the section bars 2 so that they each face the face 5 of the relative section bar 2.

By combining the movements of the devices 34 in the directions 23 and 31 with the heating of the faces 5 by means of the blower nozzles 51 of the heating devices 50 and with the heating of the threads 48 of weld material through the electric resistances 45, the weld material is applied along a peripheral edge of the faces 5 so as to create respective weld material beads 52, which are substantially annular.

Subsequently, the devices 40 are lifted in the direction 23 and are disengaged from the section bars 2; the welding plate 30 is placed in its forward operating position; and the devices 17, 18 are moved in the relative directions 7, 10 so as to place the beads 52 in contact with the plate 30.

Once the beads 52 have been heated, the plate 30 is moved to its retracted rest position; and the welding area between the two section bars 2 is delimited in the directions 23 and 31 by means of a pressing device 53, which is mounted on the slide 14 so as to move from and to an operating position, in which the pressing device 53 is placed in contact with the section bars 2 and around at least part of the faces 5 in order to contain the weld material of the beads 52.

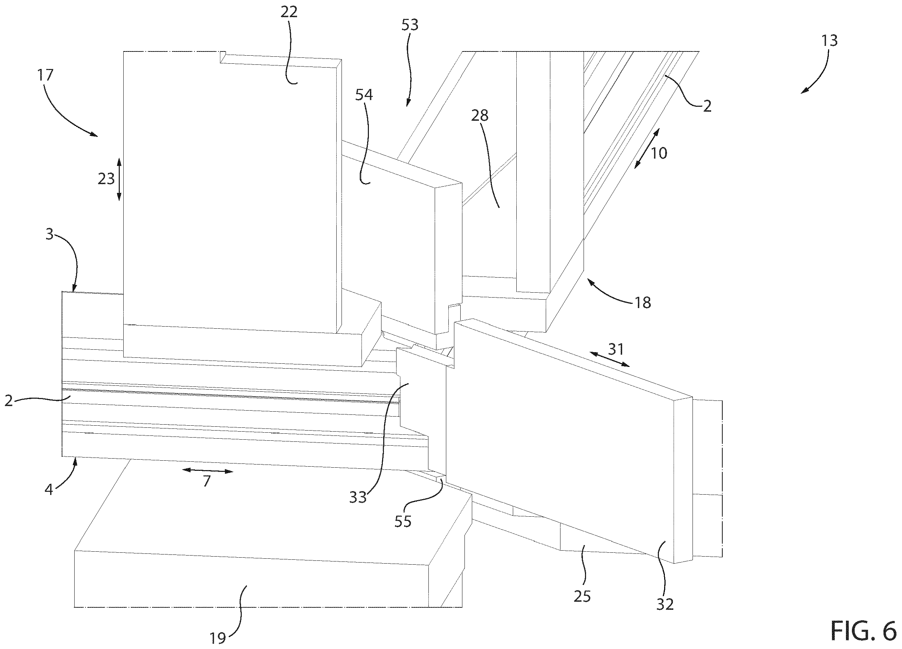

In this specific case, the device 53 comprises an upper pressing element 54, which is movable in the direction 23 between a lowered operating position and a lifted rest position, and a lower pressing element 55, which is movable in the direction 23 between a lifted operating position and a lowered rest position, and an outer side pressing element, which is defined by the shaped edge 33 of the plate 32 (figure 6).

When the device 53 is arranged in its operating position and the faces 5 are in contact with one another with the interposition of the beads 52, the beads 52 are welded to one another and the weld material of the beads 52 is contained by the pressing elements 54 and 55 and by the edge 33 inside the section bars 2.

The machine 1 has some advantages, which are mainly due to the fact that the welding of the section bars 2 through the weld material of the threads 48 does not require any preliminary chipping machining or any final processing to clean the section bars 2.

According to a variant which is not shown herein, each applying device 40 is eliminated and replaced by a 3D printer designed to apply the weld material onto the faces 5.

According to a further variant which is not shown herein, the machine 1 comprises a first apparatus to apply the weld material beads 52 onto the faces 5 of the section bars 2 and a second apparatus to weld the section bars 2 by means of the weld material beads 52, and the section bars 2 are transferred, by hand or through an automated transfer device, from the first apparatus to the second apparatus.

## Claims

1. A machine to weld section bars (2) made of a plastic material, in particular PVC, the machine comprising a first holding device (17) to hold a first section bar (2) delimited by a first end face (5); a second holding device (18) to hold a second section bar (2) delimited by a second end face (5); one applying assembly (34) to apply a weld material (48) on said first and/or second end faces (5); said holding devices (17, 18) being movable relative to one another in order to move the section bars (2) from and to a welding position, in which the end faces (5) are in contact with one another with the interposition of the weld material (48); the applying assembly (34) comprising a first heating device (50) to heat said first and/or second end faces (5), a dispensing nozzle (41) to apply the weld material (48) on said first and/or second end faces (5), and a second heating device (45) to heat the weld material (48) fed to the dispensing nozzle (41); the first heating device (50) comprising at least one blower nozzle (51) to feed hot air onto said first and/or second end faces (5); and being **characterized in that** the first heating device (50) comprises a plurality of blower nozzles (51) distributed around the dispensing nozzle (41) to feed hot air onto said first and/or second end faces (5).

2. The machine according to claim 1 and further comprising an operating device (37, 39) to move the applying assembly (34) in at least two directions (23, 31), which are transverse to one another, and along a contour of said first and/or second end faces (5).

3. The machine according to any one of the preceding claims and further comprising at least one heating unit (30) to heat the weld material (48) applied on said first and/or second faces (5).

4. The machine according to any one of the preceding claims and further comprising a pressing device (53), which is movable from and to an operating position, in which, when the section bars (2) are in their welding position, the pressing device (53) is arranged in contact with the section bars (2) and around at least part of the end faces (5) of the section bars (2) in order to contain the weld material (48).

5. The machine according to claim 4, wherein the pressing device (53) comprises an upper pressing element (54), a lower pressing element (55) and at least one side pressing element (33).

6. A method to weld section bars (2) made of a plastic material, in particular PVC, the method comprising the steps of:
holding a first section bar (2) delimited by a first end face (5);
holding a second section bar (2) delimited by a second end face (5);
applying a weld material (48) onto said first and/or second end faces (5);
moving the section bars (2) relative to one another from and to a welding position, in which the end faces (5) are in contact with one another with the interposition of the weld material (48);
heating said first and/or second end faces (5);
heating the weld material (48); and
applying the weld material (48) onto said first and/or second end faces (5) after having heated the weld material (48) and said first and/or second end faces (5);
and being **characterized in that** the weld material (48) is applied by at least one dispensing nozzle (41) and said first and/or second end faces (5) are heated by means of a plurality of hot-air blower nozzles (51) distributed around the dispensing nozzle (41); the method comprising the steps of:
moving the dispensing nozzle (41) along said first and/or second end faces (5)in a given moving direction; and
selectively activating the blower nozzle (51) that each time is arranged downstream of the dispensing nozzle (41) in said moving direction.

7. The method according to claim 6 and further comprising the steps of:
heating the weld material (48) applied on said first and/or second end faces (5) before moving the section bars (2) to their welding position.

8. The method according to claim 6 or 7 and further comprising the step of:
moving a pressing device (53) into contact with the section bars (2) and around at least part of the end faces (5) of the section bars (2) in order to contain the weld material (48) when the section bars (2) are in their welding position.

## Patentansprüche

1. Maschine zum Schweißen von Profilstäben bzw. -stangen (2) aus einem Kunststoffmaterial, insbesondere PVC, wobei die Maschine eine erste Haltevorrichtung (17) zum Halten eines ersten Profilstabs bzw. einer ersten Profilstange (2), der bzw. die durch eine erste Endfläche (5) begrenzt ist, eine zweite Haltevorrichtung (18) zum Halten eines zweiten Profilstabs bzw. einer zweiten Profilstange (2), der bzw. die durch eine zweite Endfläche (5) begrenzt ist; eine Auftragungsanordnung (34) zum Auftragen eines Schweißmaterials (48) auf die erste und/oder zweite Endfläche (5) umfasst; wobei die Haltevorrichtungen (17, 18) relativ zueinander beweglich sind, um die Profilstäbe (2) aus und in eine Schweißposition zu bewegen, in der die Endflächen (5) unter Zwischenanordnung des Schweißmaterials (48) miteinander in Kontakt sind; wobei die Auftragungsanordnung (34) eine erste Heizvorrichtung (50) zum Erhitzen der ersten und/oder zweiten Endfläche (5), eine Abgabedüse (41) zum Auftragen des Schweißmaterials (48) auf die erste und/oder zweite Endfläche (5) und eine zweite Heizvorrichtung (45) zum Erhitzen des der Abgabedüse (41) zugeführten Schweißmaterials (48) umfasst; wobei die erste Heizvorrichtung (50) zumindest eine Gebläsedüse (51) zum Zuführen heißer Luft auf die erste und/oder zweite Endfläche (5) umfasst; und **dadurch gekennzeichnet ist, dass** die erste Heizvorrichtung (50) eine Mehrzahl von Gebläsedüsen (51) umfasst, die um die Abgabedüse (41) herum verteilt sind, um heiße Luft auf die erste und/oder zweite Endfläche (5) zuzuführen.

2. Maschine nach Anspruch 1 und ferner umfassend eine Betätigungs- bzw. Bedienvorrichtung (37, 39) zum Bewegen der Auftragungsanordnung (34) in zumindest zwei Richtungen (23, 31), die quer zueinander verlaufen, und entlang einer Kontur der ersten und/oder zweiten Endfläche (5).

3. Maschine nach einem der vorhergehenden Ansprüche und ferner umfassend zumindest eine Heizeinheit (30) zum Erhitzen des Schweißmaterials (48), das auf die erste und/oder zweite Fläche (5) aufgebracht wird.

4. Maschine nach einem der vorhergehenden Ansprüche und ferner umfassend eine Pressvorrichtung (53), die aus einer und in eine Betriebsposition bewegbar ist, in der die Pressvorrichtung (53), wenn sich die Profilstäbe (2) in ihrer Schweißposition befinden, in Kontakt mit den Profilstäben (2) und um zumindest einen Teil der Endflächen (5) der Profilstäbe (2) herum angeordnet ist, um das Schweißmaterial (48) zu enthalten bzw. aufzunehmen.

5. Maschine nach Anspruch 4, wobei die Pressvorrichtung (53) ein oberes Presselement (54), ein unteres Presselement (55) und zumindest ein seitliches Presselement (33) umfasst.

6. Verfahren zum Schweißen von Profilstäben bzw. -stangen (2) aus einem Kunststoffmaterial, insbesondere PVC, wobei das Verfahren die Schritte umfasst:
Halten eines ersten Profilstabs bzw. einer ersten Profilstange (2), der bzw. die durch eine erste Endfläche (5) begrenzt ist;
Halten eines zweiten Profilstabs bzw. einer zweiten Profilstange (2), der bzw. die durch eine zweite Endfläche (5) begrenzt ist;
Auftragen eines Schweißmaterials (48) auf die erste und/oder zweite Endfläche (5);
Bewegen der Profilstäbe (2) relativ zueinander aus einer und in eine Schweißposition, in der die Endflächen (5) unter Zwischenanordnung des Schweißmaterials (48) miteinander in Kontakt sind;
Erhitzen der ersten und/oder zweiten Endfläche (5);
Erhitzen des Schweißmaterials (48); und
Auftragen des Schweißmaterials (48) auf die erste und/oder zweite Endfläche (5), nachdem das Schweißmaterial (48) und die erste und/oder zweite Endfläche (5) erhitzt wurden;
und **dadurch gekennzeichnet, dass** das Schweißmaterial (48) durch zumindest eine Abgabedüse (41) aufgetragen wird und die erste und/oder zweite Endfläche (5) mittels einer Mehrzahl von Heißluftgebläsedüsen (51) erhitzt wird, die um die Abgabedüse (41) herum verteilt sind; wobei das Verfahren die Schritte umfasst:
Bewegen der Abgabedüse (41) entlang der ersten und/oder zweiten Endfläche (5) in einer gegebenen Bewegungsrichtung; und
selektives Aktivieren der Gebläsedüse (51), die jedes Mal stromabwärts der Abgabedüse (41) in der Bewegungsrichtung angeordnet wird.

7. Verfahren nach Anspruch 6 und ferner umfassend die Schritte:
Erhitzen des Schweißmaterials (48), das auf die erste und/oder zweite Endfläche (5) aufgetragen wird, vor dem Bewegen der Profilstäbe (2) in ihre Schweißposition.

8. Verfahren nach Anspruch 6 oder 7 und ferner umfassend den Schritt:
Bewegen einer Pressvorrichtung (53) in Kontakt mit den Profilstäben (2) und um zumindest einen Teil der Endflächen (5) der Profilstäbe (2) herum, um das Schweißmaterial (48) zu enthalten bzw. aufzunehmen, wenn sich die Profilstäbe (2) in ihrer Schweißposition befinden.

## Revendications

1. Machine pour le soudage de barres profilées (2) constituées de matière plastique, en particulier de PVC, la machine comprenant un premier dispositif de maintien (17) pour maintenir une première barre profilée (2) délimitée par une première face d'extrémité (5) ; un second dispositif de maintien (18) pour maintenir une seconde barre profilée (2) délimitée par une seconde face d'extrémité (5) ; un ensemble d'application (34) pour appliquer un matériau de soudage (48) sur lesdites première et/ou seconde faces d'extrémité (5) ; lesdits dispositifs de maintien (17, 18) pouvant se déplacer l'un par rapport à l'autre afin de déplacer les barres profilées (2) à partir de et vers une position de soudage dans laquelle les faces d'extrémité (5) sont en contact l'une avec l'autre avec l'interposition du matériau de soudage (48) ; l'ensemble d'application (34) comprenant un premier dispositif de chauffage (50) pour chauffer lesdites première et/ou seconde faces d'extrémité (5), une buse de distribution (41) pour appliquer le matériau de soudage (48) sur lesdites première et/ou seconde faces d'extrémité (5), et un second dispositif de chauffage (45) pour chauffer le matériau de soudage (48) envoyé à la buse de distribution (41) ; le premier dispositif de chauffage (50) comprenant au moins une buse de soufflage (51) pour envoyer de l'air chaud sur lesdites première et/ou seconde faces d'extrémité (5) ; et **caractérisée en ce que** le premier dispositif de chauffage (50) comprend une pluralité de buses de soufflage (51) réparties autour de la buse de distribution (41) pour envoyer de l'air chaud sur lesdites première et/ou seconde faces d'extrémité (5).

2. Machine selon la revendication 1 et comprenant en outre un dispositif de fonctionnement (37, 39) pour déplacer l'ensemble d'application (34) dans au moins deux directions (23, 31), lesquelles sont transversales l'une par rapport à l'autre, et le long d'un contour desdites première et/ou seconde faces d'extrémité (5).

3. Machine selon l'une quelconque des revendications précédentes et comprenant en outre au moins une unité de chauffage (30) pour chauffer le matériau de soudage (48) appliqué sur lesdites première et/ou seconde faces (5).

4. Machine selon l'une quelconque des revendications précédentes et comprenant en outre un dispositif de pressage (53), lequel peut se déplacer à partir de et vers une position de fonctionnement dans laquelle, lorsque les barres profilées (2) sont dans leur position de soudage, le dispositif de pressage (53) est disposé en contact avec les barres profilées (2) et autour d'au moins une partie des faces d'extrémité (5) des barres profilées (2) afin de retenir le matériau de soudage (48).

5. Machine selon la revendication 4, dans laquelle le dispositif de pressage (53) comprend un élément de pressage supérieur (54), un élément de pressage inférieur (55) et au moins un élément de pressage latéral (33).

6. Procédé pour le soudage de barres profilées (2) constituées de matière plastique, en particulier de PVC, le procédé comprenant les étapes consistant à :
maintenir une première barre profilée (2) délimitée par une première face d'extrémité (5) ;
maintenir une seconde barre profilée (2) délimitée par une seconde face d'extrémité (5) ;
appliquer un matériau de soudage (48) sur lesdites première et/ou seconde faces d'extrémité (5) ;
déplacer les barres profilées (2) l'une par rapport à l'autre à partir de et vers une position de soudage dans laquelle les faces d'extrémité (5) sont en contact l'une avec l'autre avec l'interposition du matériau de soudage (48) ;
chauffer lesdites première et/ou seconde faces d'extrémité (5) ;
chauffer le matériau de soudage (48) ; et
appliquer le matériau de soudage (48) sur lesdites première et/ou seconde faces d'extrémité (5) après avoir chauffé le matériau de soudage (48) et lesdites première et/ou seconde faces d'extrémité (5) ;
et étant **caractérisé en ce que** le matériau de soudage (48) est appliqué par au moins une buse de distribution (41) et lesdites première et/ou seconde faces d'extrémité (5) sont chauffées au moyen d'une pluralité de buses de soufflage (51) d'air chaud réparties autour de la buse de distribution (41) ; le procédé comprenant les étapes consistant à :
déplacer la buse de distribution (41) le long desdites première et/ou seconde faces d'extrémité (5) dans une direction de déplacement donnée ; et
activer sélectivement la buse de soufflage (51) qui est à chaque fois disposée en aval de la buse de distribution (41) dans ladite direction de déplacement.

7. Procédé selon la revendication 6 et comprenant en outre les étapes consistant à :
chauffer le matériau de soudage (48) appliqué sur lesdites première et/ou seconde faces d'extrémité (5) avant de déplacer les barres profilées (2) vers leur position de soudage.

8. Procédé selon la revendication 6 ou 7 et comprenant en outre l'étape consistant à :
déplacer un dispositif de pressage (53) jusqu'au contact avec les barres profilées (2) et autour d'au moins une partie des faces d'extrémité (5) des barres profilées (2) afin de retenir le matériau de soudage (48) lorsque les barres profilées (2) sont dans leur position de soudage.
